# EUROPEAN PATENT SPECIFICATION

(11) **EP 3 149 065 B1**
(45) Date of publication and mention of the grant of the patent: **16.05.2018**
(21) Application number: 15724618.2
(22) Date of filing: 21.05.2015
(51) Int. Cl.: C08G 59/40, C08J 5/24

(54) **THERMOMECHANICALLY REPROCESSABLE EPOXY COMPOSITES AND PROCESSES FOR THEIR MANUFACTURING**
THERMOMECHANISCH WIEDERVERARBEITBARE EPOXIDVERBUNDWERKSTOFFE UND VERFAHREN ZUR HERSTELLUNG DAVON
COMPOSITES DE RÉSINE ÉPOXYDE POUVANT ÊTRE RETRAITÉS DE MANIÈRE THERMOMÉCANIQUE ET LEURS PROCÉDÉS DE FABRICATION

(30) Priority: 26.05.2014 EP 14382184
(43) Date of publication of application: 05.04.2017
(73) Proprietor: Fundación Cidetec, 20009 Donostia-San Sebastián (ES)
(72) Inventor: ODRIOZOLA, Ibon, E-20009 Donostia-san Sebastián (ES); RUIZ DE LUZURIAGA, Alaitz, E-20009 Donostia-san Sebastián (ES); REKONDO, Alaitz, E-20009 Donostia-san Sebastián (ES); MARTÍN, Roberto, E-20009 Donostia-san Sebastián (ES); MARKAIDE, Nerea, E-20009 Donostia-san Sebastián (ES); CABAÑERO, Germán, E-20009 Donostia-san Sebastián (ES); GRANDE, Hans-Jürgen, E-20009 Donostia-san Sebastián (ES)
(74) Representative: ZBM Patents - Zea, Barlocci & Markvardsen
(86) International application number: PCT/EP2015/061311
(87) International publication number: WO 2015/181054

(56) References cited:
- EP-A1- 1 325 937
- WO-A1-2008/127556
- WO-A1-2009/035403
- US-A- 4 882 399
- ALAITZ REKONDO ET AL: "Catalyst-free room-temperature self-healing elastomers based on aromatic disulfide metathesis", MATER. HORIZ., vol. 1, no. 2, 1 January 2014 (2014-01-01) , pages 237-240, XP055177596, ISSN: 2051-6347, DOI: 10.1039/C3MH00061C

## Description

The present invention relates to the field of thermosetting resins. In particular, the present invention refers to thermoset epoxy composites which are thermomechanically reprocessable, to enduring prepregs useful in the manufacture of such composites and to processes for their manufacture.

### BACKGROUND ART

Today, the benefits of components and products designed and produced in composite materials - instead of metals, such as aluminium and steel - are well recognized by many industries. Their excellent mechanical properties at very low material densities, as well as their corrosion resistance, among other properties, have created a huge market demand in buildings, infrastructures automotive, industrial, aerospace, wind energy and other sectors.

Composite materials usually consist of a reinforcement phase, generally comprising continuous or discontinuous fibres, and a matrix phase, generally a thermoset or thermoplastic polymer. The matrix material surrounds and supports the reinforcement material by maintaining their relative positions. The reinforcement imparts their special mechanical and physical properties to enhance the matrix properties.

Composite materials must be manufactured into their final shape. The matrix material can be introduced in the reinforcement before or after the reinforcement material is placed into the mould cavity or onto the mould surface. The matrix material experiences a melding event, after which the part shape is essentially set.

In the case of thermoset composites, the resin matrix cures or hardens into a given shape through an irreversible chemical reaction. Meaning, once a thermoset composite is formed, it cannot be remoulded or reshaped (that is, it is not reprocessable). Because of this, the recycling of thermoset composites is extremely difficult. Usually, the resin is removed by pyrolisis to recover the reinforcement phase. This process is time and energy-consuming and not environmentally friendly.

In an attempt to provide reprocessable composites Leibler et al., disclose in US2013/0300020 an epoxy thermoset composite which could be transformed, repaired or recycled. Such composite comprises, as matrix phase, a thermosetting resin and a hardener, including a catalyst. The catalyst, which remains in the composite after its manufacturing, is essential for the reversibility reaction, thus providing the reprocessability properties of the material. The examples disclose the use of a Zn salt catalyst.
In spite of the contribution made by Leibler et al., there could be some drawbacks due to the use of a metal catalyst: (a) loss of activity, (b) difficult sample preparation and handling, (c) toxicity, and (d) higher cost.
On the one hand, it has been found that owing to competing reactions, the catalyst undergoes chemical changes, and its activity becomes lower (catalyst deactivation). The total catalyst lifetime is of crucial importance for the economics of a process. The chemical, thermal, and mechanical stability of a catalyst determines its lifetime in industrial reactors. Catalyst stability is influenced by numerous factors, including decomposition, coking, and poisoning. Moreover, catalysts must be regenerated or eventually replaced taking into account the temperatures used in the reprocessing of epoxy resins.
On the other hand, such metal catalysts require high temperatures (140-180 °C) to be dissolved into the precursor mixture, as they have to be melt, in order to be well mixed to act as homogeneous catalysts.

WO2009/035403 discloses recyclable composite wherein the fibres are embedded in a matrix of epoxy resin.

Therefore, in spite of the efforts made, there is still the need of further reprocessable composites.

### SUMMARY OF THE INVENTION

The present inventors have developed thermoset composites which can be re-shaped or reprocessed, if desired, by applying suitable temperature or pressure conditions without the need of any catalyst (see Example 12).

In addition, the present inventors have found that the thermoset composites of the invention can be repaired by applying suitable temperature/pressure conditions on the damaged area (see Example 15).

Thus, in a first aspect the present invention provides a thermomechanically reprocessable thermoset composite comprising:
(i) a reinforcement phase comprising fibres, this phase having a volume percentage comprised from 25 to 70% with respect to the total volume of the composite, and
(ii) a matrix phase having a volume percentage comprised from 30 to 75% with respect to the total volume of the composite,
being the sum of volumes of both phases forming the composite 100%, and
wherein the matrix phase comprises a cured epoxy resin in a percentage comprised from 50-100% by weight with respect to the total weight of the matrix phase, and the cured epoxy resin being obtainable by:
(a) mixing an epoxide-functionalised resin with a functionality equal to or higher than 2 with a cross-linking agent of formula (I)

   Ar-S-S-Ar (I)

   wherein
   Ar means a ring system from 5 to 14 carbon atoms, the system comprising 1-3 rings, where:
   the rings are saturated, partially unsaturated, or aromatic; provided that at least one ring is aromatic,
   the rings are isolated, partially or totally fused,
   at least one of the carbon atoms forming the aryl radical is substituted by an epoxide-reactive functional radical selected from the group consisting of: -NHR₁₀, -NH-NHR₁₀, -CO-NH-NHR₁₀, -COOH, -SH, -OH,-CO-NHR₁₀, -NCN-NH-NHR₁₀, 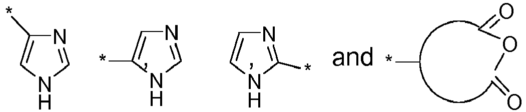 wherein the asterisk denotes the carbon atom through which the epoxide-reactive radical binds to the ring system
   and the remaining carbon atoms are optionally substituted by one or more radicals independently selected from the group consisting of (C₁-C₂₀)alkyl, (C₅-C₁₄)aryl, -OR₂, -(CO)R₃, -O(CO)R₄, -(SO)R₅, -NH-CO-R₆, -COOR₇, -NR₈R₉, -NO₂, and halogen;
   R₂ to R₁₀ are the same or different, and are selected from the group consisting of: -H, (C₁-C₂₀)alkyl, and phenyl; and
   Ar is bonded to the -S- atom through an aromatic ring,
   and the molar ratio between the epoxide groups of the epoxide-functionalised resin and the epoxide-reactive functional radicals of the cross-linking agent of formula (I) is comprised from the stoichiometric to a two-fold excess of epoxide reactive functional group, and
(b) curing the reaction mixture at a temperature comprised from 10 to 200 °C, this step being performed in the absence of a catalyst.

The present inventors have found that using an epoxy resin cross-linked with an agent of formula (I), the resulting composite also shows the ability of being reprocessable, recyclable and repairable. Advantageously, no catalyst is required for reprocessing the epoxy composite. Therefore, the composite of the present invention overcomes the limitations shown by the composites of Leibler et al. recited above (cf. US2013/0300020), due to the incorporation of the catalyst (such as toxicity, lifetime, sample preparation, handling, and cost).

Surprisingly, in addition to the above, it has also been found another intriguing property of the epoxy resin forming the composite of the present invention: a transient mechanochromism. That is, when the composite receives an impact, a color change in the visible region of the EM spectrum is observed on the damaged area. Such mechanochromic behaviour is reversible and disappears in a few hours. This new property confers to the composite of the invention a great value because it permits detecting damage by simple visual inspection.

Still another benefit of the thermoset composite of the invention is that the fibrous reinforcement can be recycled at the end of its life, by dissolving the matrix in a solution of a disulfide reducing agent (such as 2-mercaptoethanol) (see Example 18). The recovered fibrous reinforcement layers can then afterwards be re-sold, re-used or repurposed.

In view of the above, the composites of the invention represent a great advance in the field of thermoset materials.
In a second aspect, the present invention provides an enduring prepreg comprising a reinforcement material layer which is partially or totally impregnated with a completely cured epoxy resin, wherein:
the reinforcement material layer comprises fibres, and
the completely cured epoxy resin is obtainable by
   (i) mixing the epoxide-functionalised resin with a functionality equal to or higher than 2 with a cross-linking agent of formula (I) as defined above, at a molar ratio between the epoxide groups of the epoxide-functionalised resin and the epoxide-reactive functional radicals of the cross-linking agent of formula (I) comprised from the stoichiometric to a two-fold excess of epoxide reactive functional group; and
   (ii) curing the mixture at a temperature comprised from 10 to 200 °C for a period of time such that the resin reaches the maximum Tg value.

Prepregs, consisting of a reinforcement material impregnated with a resin matrix, are widely used as starting materials in the manufacturing of thermoset composite components. Usually, the matrix system used to impregnate a prepreg material is an epoxy-based resin. Once the reinforcement is impregnated, the epoxy matrix is partially cured (referred to as B-staged) and tacky, and in this form is supplied to the composite manufacturer, who can use it to lay-up the part. Such partial curing of the matrix prevents the epoxy resin from leaking from the reinforcement fibres, while still keeping enough epoxide and hardener functional groups to perform the curing and consolidation of the final thermoset component. Although such prepreg systems are widely used in industry, they still have some limitations: (a) since the matrix is in a B-stage, the prepreg sheets need to be covered on both sides with a protective release film. Prior to use, such films need to be eliminated; (b) the prepregs need to be stored either refrigerated or frozen prior to use, having the material a limited shelf-life (the maximum storage life when stored continuously in a sealed moisture-proof bag, typically at -18 °C) and out-life (the maximum accumulated time allowed at room-temperature during its manipulation). This is due to the fact that the epoxide groups of the resin slowly keep reacting with the hardener, and after a certain period of time (specified by the manufacturer), such reactive functional groups will no longer be present in a sufficient amount; (c) once the expiration date is past (shelf-life and out-life), the prepreg does not longer have the capacity to adhere to itself or to the tool, being impossible to use it to form a consolidated laminate or final component. In this case the expired prepregs are rejected, creating a non-reusable waste; and (d) when the prepregs are extracted from the refrigerators prior to use, they need to be kept in a sealed bag until reaching room-temperature, in order to avoid the condensation of water droplets due to the difference of temperature. This process can take hours, if the prepreg rolls are large.

The present inventors have surprisingly found that when the prepreg of the second aspect of the invention comprises the epoxy resin completely cured, it presents some important advantages and it can still be used for the manufacturing of composite parts. The advantages are that it is not required to store it refrigerated or frozen prior to use, nor any release film is required for storage, and does not have any expiration date. These new properties do not negatively affect to the main use of the prepreg as starting material for manufacturing composites of good quality, as shown in Examples 10 and 11, below. In addition, the use of these prepregs does not mean the development of special technology or machinery; just applying appropriate pressure and temperature composites can be achieved.

Furthermore, in a third aspect, the present invention provides an enduring prepreg comprising a reinforcement material layer which is partially or totally impregnated with a partially cured epoxy resin, wherein:
the reinforcement material layer comprises fibres, and
the partially cured epoxy resin is obtainable by
   (i) mixing the epoxide-functionalised resin with a functionality equal to or higher than 2 with a cross-linking agent of formula (I) as defined above, at a molar ratio between the epoxide groups of the epoxide-functionalised resin and the epoxide-reactive functional radicals of the cross-linking agent of formula (I) is comprised from the stoichiometric to a two-fold excess of epoxide reactive functional group; and
   (ii) curing the mixture at a temperature comprised from 10 to 200 °C for a period of time such that the resin reaches a Tg value which is equal or higher than 10 °C but lower than the maximum Tg.

The composites of the present invention showing such advantageous properties can be prepared following several processes.

Thus, in a fourth aspect, the present invention provides a process for the manufacture of a composite as defined above, the process comprising:
(a) mixing the epoxide functionalised resin with the curing agent of formula (I) where the molar ratio between the epoxide groups of the epoxide-functionalised resin and the epoxide-reactive functional radicals of the cross-linking agent of formula (I) is from stoichiometric to a two-fold excess of epoxide reactive functional group;
(b) impregnating a reinforcement phase with the reaction mixture of step (a); and
(c) curing the reaction mixture at a temperature comprised from 10 to 200 °C for a period of time such that the resin reaches at least 50% of the maximum Tg value. Additionally, pressure can be also applied.

In a fifth aspect, the present invention provides a process for the manufacture of a composite as defined above, the process comprising:
(d) laying up prepreg layers as defined in the second aspect of the invention, and
(e) applying heat and pressure.

In a sixth aspect, the present invention provides a process for the manufacture of a composite as defined above, the process comprising:
(f) laying up prepreg layers as defined in the third aspect of the invention, and
(g) applying heat and pressure for a period of time such that the resin reaches the maximum Tg value

In a seventh aspect, the present invention provides a composite obtainable by any of the processes of the fourth, fifth or sixth aspect of the invention.

In an eighth aspect, the present invention provides a process for manufacturing an enduring prepreg as defined in the second aspect of the invention, the process comprising:
(a) mixing the epoxide functionalised resin with the curing agent of formula (I) as defined in the first aspect of the invention, in a molar ratio comprised from stoichiometric to a two-fold excess of epoxide reactive functional group;
(b) impregnating the reinforcement material layer with the reaction mixture of step (a); and
(c) curing the reaction mixture at a temperature comprised from 10 to 200 °C for a period of time such that the resin reaches the maximum Tg value.

In a ninth aspect, the present invention provides a process for manufacturing a prepreg as defined in the third aspect of the invention, the process comprising:
(a) mixing the epoxide functionalised resin with the curing agent of formula (I) as defined in the first aspect of the invention, in a molar ratio comprised from stoichiometric to a two-fold excess of epoxide reactive functional group;
(b) impregnating the reinforcement material layer with the reaction mixture of step (a); and
(c) curing the reaction mixture at a temperature comprised from 10 to 200 °C for a period of time such that the resin reaches a Tg value which is equal or higher than 10 °C but lower than the maximum Tg value.

In a tenth aspect, the present invention provides a prepreg obtainable by any of the processes of the eighth and ninth aspects of the invention.

Finally, in an eleventh aspect, the present invention provides an article of manufacture made of a composite as defined in any of the first and seventh aspects of the invention.

### DETAILED DESCRIPTION

As it has been stated above, the present invention provides a reprocessable thermoset composite.

In the present invention, the term "composite" is a material made from two or more constituent materials with significantly different physical or chemical properties, that when combined, produce a material with characteristics different from the individual components. The individual components remain separate and distinct within the finished structure. Composite materials are generally used for buildings, bridges, wind blades, aircraft and automotive structural components, boat hulls, storage tanks, among others.

Typically, resin-based composite materials include at least two parts, a reinforcement phase (which comprises one or more fibrous material layer) and a matrix phase (which comprises the resin).

In the present invention, the term "reprocessable" is to be understood as that the cured material can change its form, applying pressure and heat. The selection of specific pressure and heat conditions will depend on the specific nature of the material and shape of final part. Forms part of the routine tasks of the skilled person in the art the selection of appropriate pressure and heat conditions.

In the present invention, the term "thermomechanically" is to be understood as that the change of form is achieved applying simultaneously heat and a mechanical force such as pressure.

In the present invention, the term "resin" means any polymer, oligomer or monomer comprising two or more epoxide groups.

In the present invention, the term "polymer" means a molecule of high relative molecular mass, the structure of which essentially comprises the multiple repetition of units derived, actually or conceptually, from molecules of low relative molecular mass.

In the present invention, the term "oligomer" means a molecule of intermediate relative molecular mass, the structure of which essentially comprises a small plurality of units derived, actually or conceptually, from molecules of lower relative molecular mass.

In the present invention, the term "monomer" means a molecule which can undergo polymerization, thereby contributing constitutional units to the essential structure of a macromolecule.

In the present invention, the term "functionality equal to or higher than 2" when referred to the epoxide-functionalised resin, means that each resin molecule comprises at least two epoxide groups.
In the present invention, the term "percentage (%) by weight" (w/w %) refers to the percentage of each ingredient in relation to the total weight.

In the present invention the sentence "two-fold excess of epoxide reactive group" is determined starting from the stoichiometric ratio and multiplying the number of moles related to the epoxide reactive groups by 2. For instance, when the epoxide reactive group is a -NH₂ group, the stoichiometric ratio between the epoxide groups of the resin and -NH₂ is 2:1. From this, and considering how it is estimated, the "two-fold excess" ratio for the case that the epoxide reactive group is -NH₂ will be 1:1.

According to the present invention when the ring system is formed by "isolated" rings means that the ring system is formed by two or three rings and said rings are bound via a bond from the atom of one ring to the atom of the other ring. The term "isolated" also embraces the embodiment in which the ring system has only one aromatic ring, such as a phenyl.

According to the present invention when the ring system has rings "totally fused", means that the ring system is formed by two or three rings in which two or more atoms are common to two adjoining rings. Illustrative non-limitative examples are 1,2,3,4-tetrahydronaphthyl, 1-naphthyl, 2-naphthyl, anthryl, or phenanthryl.

According to the present invention when the ring system is "partially fused" it means that the ring system is formed by three rings, being at least two of said rings totally fused (i.e. two or more atoms being common to the two adjoining rings) and the remaining ring(s) being bound via a bond from the atom of one ring to the atom of one of the fused rings.

The term "molar ratio" refers to the relation of moles of epoxide groups of the epoxide-functionalised resin *vs.* the moles of epoxide reactive functional radicals of the cross-linking agent of formula (I) as defined above.

The term "volume percentage (%)", when referred to the reinforcement and matrix phases, is estimated dividing the volume of the phase with respect to the total volume of the composite and the resulting value is multiplied by 100. Depending on the nature of the fibre, the fibre volume of a composite material may be determined by chemical matrix digestion (ASTM D3171) or resin burn-off (ASTM D2584), in which the matrix is eliminated and the fibres weighed and calculated from substituent weights and densities. Alternatively, a photomicrographic technique may be used in which the number of fibres in a given area of a polished cross section is counted and the volume fraction determined as the area fraction of each constituent.

The term "percentage by weight (% w/w)", when referred to the cured epoxy resin comprised in the matrix phase, is estimated determining the amount of epoxy resin with respect to the total weight of the matrix phase and the resulting value is multiplied by 100.

The term "curing" refers to the hardening of a mixture of epoxide-functionalised compounds and hardener by chemical cross-linking, brought about by chemical additives, ultraviolet radiation, electron beam, microwave, infrared radiation or heat. In this process the resin viscosity drops initially upon the application of heat, passes through a region of maximum flow and begins to increase as the chemical reactions increase the average length and the degree of cross-linking between the constituent resins. This process continues until a continuous 3-dimensional network of polymer chains is created - this stage is termed gelation. In terms of processability of the resin this marks an important watershed: before gelation the system is relatively mobile, after it the mobility is very limited, the micro-structure of the resin and the composite material is fixed and severe diffusion limitations to further cure are created. Thus, in order to achieve vitrification in the resin, it is usually necessary to increase the process temperature after gelation.

In one embodiment, the composite is a multilayer composite.

In one embodiment of the first aspect of the invention, the epoxide-reactive functional group is -NHR₁₀, or -NH-NHR_{10,} wherein R₁₀ is as defined above.

In one embodiment of the first aspect of the invention, the epoxide-reactive functional group is -NH₂.

In another embodiment of the first aspect of the invention, when the epoxide-reactive functional group is -NH₂, the molar ratio between the epoxide groups of the epoxide-functionalised resin and the epoxide-reactive functional radicals of the cross-linking agent is comprised from 2:1 to 1:1.

In another embodiment, Ar is a phenyl radical.

In another embodiment of the first aspect of the invention, the cross-linking agent is one of formula (II) 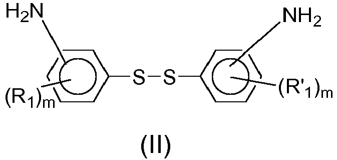 wherein
R₁ and R₁' are independently selected from the group consisting of: -H, (C₁-C₂₀)alkyl, (C₅-C₁₄)aryl, -OR₂, -(CO)R₃, -O(CO)R₄, -(SO)R₅, -NH-CO-R₆, -COOR₇, -NR₈R₉, -NO₂, and halogen;
R₂ to R₉ are the same or different, and are selected from the group consisting of: -H, (C₁-C₂₀)alkyl, and (C₅-C₁₄)aryl; and
m is 4.

In another embodiment, R₁ and R₁' are the same.

In another embodiment, the -NH₂ radicals in general formula (II) are in *para-*position.

In still another embodiment, R₁ and R₁' are hydrogen.

In still yet another embodiment, R₁ and R₁' are the same and are hydrogen.

In still yet another embodiment, the cross-linking agent is one of formula (III): 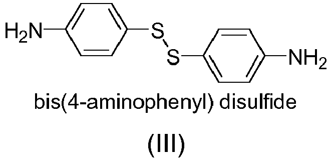 In one embodiment, the epoxide-functionalised resin consists of a single epoxide-functionalised type resin.

In another embodiment, the single epoxide-functionalised resin is selected from the group consisting of difunctional (thus having two epoxide groups), trifunctional (thus having three epoxide groups) and tetrafunctional epoxide-functionalised resins (thus having four epoxide groups).

Illustrative non-limitative examples of difunctional epoxy resin are: Bisphenol A diglycidyl ether, Bisphenol F diglycidyl ether, tetrabromobisphenol A diglycidyl ether, propylene glycol diglycidyl ether, butylene glycol diglycidyl ether, ethylene glycol diglycidyl ether,neopentyl glycol diglycidyl ether, 1,4-butanediol diglycidyl ether, 1,6-hexanediol diglycidyl ether, cyclohexanedimethanol diglycidyl ether, polyethylene glycol diglycidyl ether, polypropylene glycol diglycidyl ether, polytetramethylene glycol diglycidyl ether, resorcynol diglycidyl ether, neopentyl glycol diglycidyl ether, bisphenol A polyethylene glycol diglycidyl ether, bisphenol A polypropylene glycol diglycidyl ether, and mixtures thereof.

Illustrative non-limitative examples of tri-functional epoxy resins are: triglycidyl ether of para-aminophenol, and triglycidyl meta-aminophenol.

Illustrative non-limitative examples of tetra-functional epoxy resins are: N,N,N',N'-tetraglycidyl methylene dianiline, N,N,N',N'-tetraglycidyl-m-xylenediamine, and pentaerythritol tetraglycidyl ether.

In another embodiment, the epoxide-functionalised resin is a mixture of two or more epoxide-functionalised resins, said resins being independently selected from the group consisting of difunctional, trifunctional, and tetrafunctional epoxide-functionalised resins. The functionality of the resulting mixture is calculated as the weighted average from the functionalities of the epoxide-functionalised resins forming the mixture. For instance, if the mixture is made of two difunctional epoxide resins, then its functionality is 2; and if the mixture is made of resins with different functionalities, the functionality is calculated multiplying the percentage proportion of the resins with a particular functionality by such functionality value and summing the values. For instance, if the mixture is made of 60% (molar percentage) of difunctional resins and 40% (molar percentage) of tetrafunctional resins, the functionality of the mixture is calculated as: 2 x 0.6 + 4 x 0.4= 2.8. No special technique is required for mixing the different resins. There available commercial resins which are mixture of resins (such as Araldite).

In one embodiment, optionally in combination with any of the embodiments above or below, the epoxide-functionalised resin is a difunctional epoxy resin or a mixture comprising one or more difunctional epoxy resins.

In one embodiment, optionally in combination with any of the embodiments above or below, the epoxide-functionalised resin is a bisphenol epoxy resin.

In still yet another embodiment, optionally in combination with any of the embodiments above or below, the epoxide-functionalised resin is a mixture of epoxy resins comprising a bisphenol epoxy resin.

In another embodiment, optionally in combination with any of the embodiments above or below, the difunctional epoxy-resin is bisphenol A diglycidyl ether.

In still yet another embodiment, optionally in combination with any of the embodiments above or below, the epoxide-functionalised resin is a mixture comprising bisphenol A diglycidyl ether.

In still yet another embodiment, optionally in combination with any of the embodiments above or below, the epoxide-functionalised resin is a mixture of difunctional epoxy resins.

In still yet another embodiment, optionally in combination with any of the embodiments above or below, the epoxide-functionalised resin is a mixture of difunctional epoxy resins comprising a bisphenol epoxy resin.

In still yet another embodiment, optionally in combination with any of the embodiments above or below, the epoxide-functionalised resin is a mixture of two difunctional epoxy resins comprising a bisphenol epoxy resin.

In still yet another embodiment, optionally in combination with any of the embodiments above or below, the epoxide-functionalised resin is a mixture of two difunctional epoxy resins comprising a bisphenol epoxy resin in a % w/w comprised from 60 to 99.

In still yet another embodiment, optionally in combination with any of the embodiments above or below, the epoxide-functionalised resin is a mixture of two difunctional epoxy resins comprising bisphenol A diglycidyl ether.

In still yet another embodinent, optionally in combination with any of the embodiments above or below, the epoxide-functionalised resin is a mixture of two difunctional epoxy resins comprising bisphenol A diglycidyl ether % w/w comprised from 60 to 99.

In still yet another embodiment, optionally in combination with any of the embodiments above or below, the epoxide-functionalised resin is a mixture of two difunctional epoxy resins comprising bisphenol A diglycidyl ether % w/w comprised from 70 to 90.

In still another embodiment, optionally in combination with any of the embodiments above or below, the epoxide-functionalised resin is a mixture comprising bisphenol A diglycidyl ether and 1,4-butanediol diglycidyl ether.

In still another embodiment, optionally in combination with any of the embodiments above or below, the epoxide-functionalised resin is a mixture of bisphenol A diglycidyl ether at 80% w/w and 1,4-butanediol diglycidyl ether at 20% w/w.

In still another embodiment, optionally in combination with any of the embodiments above or below, the cured epoxy resin is obtainable by the process comprising: (a) mixing a difunctional epoxy resin or mixture of difunctional epoxy resins with a cross-linking agent of formula (I) as defined above.

In still another embodiment, optionally in combination with any of the embodiments above or below, the cured epoxy resin is obtainable by the process comprising: (a) mixing a mixture of difunctional epoxy resins with a cross-linking agent of formula (I) as defined above.

In still another embodiment, optionally in combination with any of the embodiments above or below, the cured epoxy resin is obtainable by the process comprising: (a) mixing a mixture of difunctional epoxy resins, the mixture comprising a bisphenol epoxy resin, with a cross-linking agent of formula (I) as defined above.

In still another embodiment, optionally in combination with any of the embodiments above or below, the cured epoxy resin is obtainable by the process comprising: (a) mixing a mixture of two difunctional epoxy resins, the mixture comprising a bisphenol epoxy resin, with a cross-linking agent of formula (I) as defined above.

In still another embodiment, optionally in combination with any of the embodiments above or below, the cured epoxy resin is obtainable by the process comprising: (a) mixing a mixture comprising bisphenol A diglycidyl ether with a cross-linking agent of formula (I) as defined above.

In still another embodiment, optionally in combination with any of the embodiments above or below, the cured epoxy resin is obtainable by the process comprising: (a) mixing a mixture comprising bisphenol A diglycidyl ether and 1,4-butanediol diglycidyl ether, with a cross-linking agent of formula (I) as defined above.

In still another embodiment, optionally in combination with any of the embodiments above or below, the cured epoxy resin is obtainable by the process comprising: (a) mixing a mixture comprising bisphenol A diglycidyl ether at 80% w/w and 1,4-butanediol diglycidyl ether at 20% w/w, with a cross-linking agent of formula (I) as defined above.

In still another embodiment, optionally in combination with any of the embodiments above or below, the cured epoxy resin is obtainable by the process comprising: (a) mixing a difunctional epoxy resin or mixture of difunctional epoxy resins with a cross-linking agent of formula (I) as defined above, wherein Ar is a phenyl radical.

In still another embodiment, optionally in combination with any of the embodiments above or below, the cured epoxy resin is obtainable by the process comprising: (a) mixing a mixture of difunctional epoxy resins with a cross-linking agent of formula (I) as defined above, wherein Ar is a phenyl radical.

In still another embodiment, optionally in combination with any of the embodiments above or below, the cured epoxy resin is obtainable by the process comprising: (a) mixing a mixture of difunctional epoxy resins, the mixture comprising a bisphenol epoxy resin, with a cross-linking agent of formula (I) as defined above, wherein Ar is a phenyl radical.

In still another embodiment, optionally in combination with any of the embodiments above or below, the cured epoxy resin is obtainable by the process comprising: (a) mixing a mixture of two difunctional epoxy resins, the mixture comprising a bisphenol epoxy resin, with a cross-linking agent of formula (I) as defined above, wherein Ar is a phenyl radical.

In still another embodiment, optionally in combination with any of the embodiments above or below, the cured epoxy resin is obtainable by the process comprising: (a) mixing a mixture of bisphenol A diglycidyl ether and 1,4-butanediol diglycidyl ether, with a cross-linking agent of formula (I) as defined above, wherein Ar is a phenyl radical.

In still another embodiment, optionally in combination with any of the embodiments above or below, the cured epoxy resin is obtainable by the process comprising: (a) mixing a difunctional epoxy resin or mixture of difunctional epoxy resins with a cross-linking agent of formula (I) as defined above, wherein Ar is a phenyl radical where uniquely one carbon atom of the ring is substituted.

In still another embodiment, optionally in combination with any of the embodiments above or below, the cured epoxy resin is obtainable by the process comprising: (a) mixing a mixture of difunctional epoxy resins with a cross-linking agent of formula (I) as defined above, wherein Ar is a phenyl radical, where uniquely one carbon atom of the ring is substituted.

In still another embodiment, optionally in combination with any of the embodiments above or below, the cured epoxy resin is obtainable by the process comprising: (a) mixing a mixture of difunctional epoxy resins, the mixture comprising a bisphenol epoxy resin, with a cross-linking agent of formula (I) as defined above, wherein Ar is a phenyl radical, where uniquely one carbon atom of the ring is substituted.

In still another embodiment, optionally in combination with any of the embodiments above or below, the cured epoxy resin is obtainable by the process comprising: (a) mixing a mixture of two difunctional epoxy resins, the mixture comprising a bisphenol epoxy resin, with a cross-linking agent of formula (I) as defined above, wherein Ar is a phenyl radical, where uniquely one carbon atom of the ring is substituted.

In still another embodiment, optionally in combination with any of the embodiments above or below, the cured epoxy resin is obtainable by the process comprising: (a) mixing a mixture of bisphenol A diglycidyl ether and 1,4-butanediol diglycidyl ether, with a cross-linking agent of formula (I) as defined above, wherein Ar is a phenyl radical, where uniquely one carbon atom of the ring is substituted.

In still another embodiment, optionally in combination with any of the embodiments above or below, the cured epoxy resin is obtainable by the process comprising: (a) mixing a difunctional epoxy resin or mixture of difunctional epoxy resins with a cross-linking agent of formula (I) as defined above, wherein Ar is a phenyl radical where uniquely one carbon atom of the ring is substituted with an -NH₂ radical.

In still another embodiment, optionally in combination with any of the embodiments above or below, the cured epoxy resin is obtainable by the process comprising: (a) mixing a mixture of difunctional epoxy resins with a cross-linking agent of formula (I) as defined above, wherein Ar is a phenyl radical, where uniquely one carbon atom of the ring is substituted with an -NH₂ radical.

In still another embodiment, optionally in combination with any of the embodiments above or below, the cured epoxy resin is obtainable by the process comprising: (a) mixing a mixture of difunctional epoxy resins, the mixture comprising a bisphenol epoxy resin, with a cross-linking agent of formula (I) as defined above, wherein Ar is a phenyl radical, where uniquely one carbon atom of the ring is substituted with an -NH₂ radical.

In still another embodiment, optionally in combination with any of the embodiments above or below, the cured epoxy resin is obtainable by a process comprising: (a) mixing a mixture of two difunctional epoxy resins, the mixture comprising a bisphenol epoxy resin, with a cross-linking agent of formula (I) as defined above, wherein Ar is a phenyl radical, where uniquely one carbon atom of the ring is substituted with an -NH₂ radical.

In still another embodiment, optionally in combination with any of the embodiments above or below, the cured epoxy resin is obtainable by a process comprising: (a) mixing a mixture of bisphenol A diglycidyl ether and 1,4-butanediol diglycidyl ether, with a cross-linking agent of formula (I) as defined above, wherein Ar is a phenyl radical, where uniquely one carbon atom of the ring is substituted with an -NH₂ radical.

In still another embodiment, optionally in combination with any of the embodiments above or below, the curing step referred in the first aspect of the invention, is carried out at a temperature comprised from 10 to 200 °C for a period of time such that the resin reaches at least 50% of the maximum Tg value.

In the present invention, the Tg value has to be understood as the temperature at which the mechanical properties of the resin radically changed due to the internal movement of the polymer chains that form the resin. In order to determine this parameter, Differential Scanning Calorimetry (DSC) method can be performed according to ISO 11357-2 standard.

In still yet another embodiment, optionally in combination with any of the embodiments above or below, the curing step comprises a first cycle of 150 minutes at 120 °C and a second cycle of 120 minutes at 150 °C in order to cure the epoxy matrix completely.

In one embodiment, optionally in combination with any of the embodiments above or below, the cured epoxy resin is obtainable by the process comprising: (a) mixing a mixture of difunctional epoxy resins with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of difunctional epoxy resins comprising a bisphenol epoxide polymer, with a cross-linking agent of formula (II) as defined above, in a molar ratio comprised from 2.1 to 1.1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins with a cross-linking agent of formula (II) as defined above, in a molar ratio 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins comprising a bisphenol epoxy resin, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins comprising a bisphenol epoxy resin at a % by weight from 60 to 99, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins comprising a bisphenol A diglycidyl ether at a % by weight from 60 to 99, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins comprising a bisphenol A diglycidyl ether and 1,4-butanediol diglycidyl ether, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins consisting of bisphenol A diglycidyl ether and 1,4-butanediol diglycidyl ether, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins consisting of bisphenol A diglycidyl ether at 80% w/w and 1,4-butanediol diglycidyl ether at 20% w/w, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of difunctional epoxy resins with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of difunctional epoxy resins comprising a bisphenol epoxy resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins comprising a bisphenol epoxy resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins comprising a bisphenol epoxy resin at a % by weight from 60 to 99, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins comprising a bisphenol A diglycidyl ether at a % by weight from 60 to 99, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins comprising a bisphenol A diglycidyl ether and 1,4-butanediol diglycidyl ether, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins consisting of bisphenol A diglycidyl ether and 1,4-butanediol diglycidyl ether, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins consisting of bisphenol A diglycidyl ether at 80% w/w and 1,4-butanediol diglycidyl ether at 20% w/w, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins consisting of bisphenol A diglycidyl ether at 80% w/w and 1,4-butanediol diglycidyl ether at 20% w/w, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, optionally in combination with any of the embodiments above, the epoxide-functionalised resin is a mixture of epoxide-functionalised resins comprising one or more tetrafunctional resins.

In another embodiment, optionally in combination with any of the embodiments above, the epoxide-functionalised resin is a mixture of epoxide-functionalised resins comprising one tetrafunctional resin.

In another embodiment, optionally in combination with any of the embodiments above, the tetrafunctional epoxy resin is tetraglycidyl methylene dianiline.

In one embodiment, optionally in combination with any of the embodiments above or below, the cured epoxy resin is obtainable by the process comprising: (a) mixing a mixture of two difunctional epoxy resins and a tetrafunctional epoxy resin, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins, one of them being a bisphenol epoxy resin, and a tetrafunctional epoxy resin, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins, one of them being a bisphenol epoxy resin, and a tetrafunctional epoxy resin at a % by weight from 20 to 80, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins, one of them being a bisphenol A diglycidyl ether at a % by weight from 20 to 80, and a tetrafunctional epoxy resin, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of epoxy functionalised resins comprising bisphenol A diglycidyl ether, 1,4-butanediol diglycidyl ether, and a tetrafunctional epoxy resin, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture consisting of bisphenol A diglycidyl ether, 1,4-butanediol diglycidyl ether, and a tetrafunctional epoxy resin, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of bisphenol A diglycidyl ether at 40% w/w, 1,4-butanediol diglycidyl ether at 10% w/w, and a tetrafunctional resin 50%, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising difunctional and tetrafunctional epoxy resins with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising difunctional and tetrafunctional epoxy resins comprising a bisphenol epoxy resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising two difunctional epoxy resins and a tetrafunctional resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising two difunctional epoxy resins, one of them being a bisphenol epoxy resin, and a tetrafunctional epoxy resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising two difunctional epoxy resins, one of them being a bisphenol epoxy resin at a % by weight from 20 to 80, and a tetrafunctional epoxy resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising two difunctional epoxy resins, one of them being a bisphenol A diglycidyl ether at a % by weight from 20 to 80 and a tetrafunctional epoxy resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising bisphenol A diglycidyl ether, 1,4-butanediol diglycidyl ether, and a tetrafunctional epoxy resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture consisting of bisphenol A diglycidyl ether, 1,4-butanediol diglycidyl ether, and a tetrafunctional epoxy resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture consisting of bisphenol A diglycidyl ether at 40% w/w, 1,4-butanediol diglycidyl ether at 10% w/w, and a tetrafunctional epoxy resin at 50% w/w, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture consisting of bisphenol A diglycidyl ether at 40% w/w, 1,4-butanediol diglycidyl ether at 10% w/w, and a tetrafunctional epoxy resin at 50% w/w, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, optionally in combination with any of the embodiments above or below, the cured epoxy resin is obtainable by the process comprising: (a) mixing a mixture of two difunctional epoxy resins and tetraglycidyl methylene dianiline, with a cross-linking agent of formula (II) as defined above, in a molar ratio epoxide: -NH₂ comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins, one of them being a bisphenol epoxy resin, and tetraglycidyl methylene dianiline, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins, one of them being a bisphenol epoxy resin at a % by weight from 20 to 80, and tetraglycidyl methylene dianiline, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of two difunctional epoxy resins, one of them being a bisphenol A diglycidyl ether at a % by weight from 20 to 80, and tetraglycidyl methylene dianiline, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of epoxy functionalised resins comprising bisphenol A diglycidyl ether, 1,4-butanediol diglycidyl ether, and tetraglycidyl methylene dianiline, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture consisting of bisphenol A diglycidyl ether, 1,4-butanediol diglycidyl ether, and tetraglycidyl methylene dianiline, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture of bisphenol A diglycidyl ether at 40% w/w, 1,4-butanediol diglycidyl ether at 10% w/w, and tetraglycidyl methylene dianiline 50% w/w, with a cross-linking agent of formula (II) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising difunctional and tetraglycidyl methylene dianiline with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising difunctional and tetraglycidyl methylene dianiline comprising a bisphenol epoxy resin, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising two difunctional epoxy resins and tetraglycidyl methylene dianiline, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising two difunctional epoxy resins, one of them being a bisphenol epoxy resin, and tetraglycidyl methylene dianiline, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising two difunctional epoxy resins, one of them being a bisphenol epoxy resin at a % by weight from 20 to 80, and tetraglycidyl methylene dianiline, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising two difunctional epoxy resins, one of them being a bisphenol A diglycidyl ether at a % by weight from 20 to 80 and tetraglycidyl methylene dianiline, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture comprising bisphenol A diglycidyl ether, 1,4-butanediol diglycidyl ether, and tetraglycidyl methylene dianiline, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture consisting of bisphenol A diglycidyl ether, 1,4-butanediol diglycidyl ether, and tetraglycidyl methylene dianiline, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture consisting of bisphenol A diglycidyl ether at 40% w/w, 1,4-butanediol diglycidyl ether at 10% w/w, and tetraglycidyl methylene dianiline at 50% w/w, with a cross-linking agent of formula (III) as defined above, in a molar ratio comprised from 2:1 to 1:1, and (b) curing the reaction mixture at a temperature comprised from 10 to 200 °C.

In one embodiment, optionally in combination with any of the embodiments above or below, the cured epoxy resin is obtainable by the process comprising: (a) mixing a mixture consisting of bisphenol A diglycidyl ether at 40% w/w, 1,4-butanediol diglycidyl ether at 10% w/w, and tetraglycidyl methylene dianiline at 50% w/w, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In the present invention, the term "reinforcement phase" may comprise one or more discontinuous or continuous fibre layers and may be in a woven, non-crimped, non-woven, unidirectional UD, or multi-axial textile structure form. The woven form may be selected from a plain, satin or twill weave style. The non-crimped and multi-axial forms may have a number of plies and fibre orientations. Such styles and forms are well known in the composite reinforcement field, and are commercially available from a number of companies.

In one embodiment, optionally in combination with any of the embodiments above or below, the fibres of the reinforcement phase are organic or inorganic fibres.

In one embodiment, optionally in combination with any of the embodiments above or below, the fibre layer comprises a fibrous material selected from the group consisting of: glass, carbon, aramide, flax, or a combination thereof.

In another embodiment, optionally in combination with any of the embodiments above or below, the reinforcement phase comprises glass fibre.

In still another embodiment, optionally in combination with any of the embodiments above or below, the reinforcement phase is glass fibre.

In another embodiment, optionally in combination with any of the embodiments above or below, the reinforcement phase comprises carbon fibre.

In still another embodiment, optionally in combination with any of the embodiments above or below, the reinforcement phase is carbon fibre.

The matrix phase may comprise, in addition to the epoxide-functionalised resins referred in the first aspect of the invention, one or more, polymers, pigments, dyes, fillers, plasticizers, flame retardants, antioxidants, lubricants, and metals, among others.

Illustrative non-limitative examples of polymers can be selected from: elastomers, thermoplastics, thermoplastic elastomers, impact additives.

The term "pigments" means coloured particles that are insoluble in the epoxy resin. As pigments that may be used in the invention, mention may be made of titanium oxide, carbon black, carbon nanotubes, metal particles, silica, metal oxides, metal sulphides or any other mineral pigment; mention may also be made of phthalocyanins, anthraquinones, quinacridones, dioxazines, azo pigments or any other organic pigment, natural pigments (madder, indigo, crimson, cochineal, etc.) and mixtures of pigments. The pigments may represent from 0.05% to 15% by weight relative to the weight of the material.

The term "dyes" means molecules that are soluble in the epoxy resin and that have the capacity of absorbing part of the visible radiation.

Among the fillers that may be used in the thermosetting resin composition of the invention, mention may be made of: trihydrated alumina, silica, clays, calcium carbonate, carbon black, kaolin, whiskers.

The composites object of the present invention can be prepared following several methodologies. Illustrative non-limitative examples are:
(a) Wet lay-up/hand lay-up. Reinforcements are impregnated by hand with resin; this is accomplished by rollers or brushes for forcing resin into the fabrics. Laminates are left to cure using several methods. In the simplest procedure, curing takes place at room temperature. Curing can be accelerated by applying heat, typically in an oven, and pressure, by means of vacuum. For the latter, a vacuum bag with breather assemblies is placed over the lay-up and attached to the tool; then, before curing, air is evacuated using a vacuum pump.
(b) Filament winding. This process is primarily used for hollow, generally circular or oval sectioned components, such as pipes and tanks. Fibre tows are passed through a resin bath before being wound onto a mandrel in a variety of orientations, controlled by the fibre feeding mechanism, and rate of rotation of the mandrel. Finally, the resin is cured at room temperature or in an oven, applying heat.
(c) Pultrusion. Fibres are pulled from a creel through a resin bath and then on through a heated die. The die completes the impregnation of the fibre, controls the resin content and cures the material into its final shape as it passes through the heated die. This cured profile is then automatically cut to length. Fabrics may also be introduced into the die to provide fibre direction other than at 0°.
(d) RTM (Resin Transfer Moulding). Fabrics are laid up as a dry stack of materials. These fabrics can pre-pressed to the mould shape, and held together by a binder. These 'preforms' are then laid into the mould tool more easily. A second mould tool is then clamped over the first, and resin is injected into the cavity under low to moderate pressure. Vacuum can also be applied to the mould cavity to assist resin in being drawn into the fabrics. This is known as Vacuum Assisted Resin Injection (VARI) or Vacuum Assisted RTM (when additional pressure is not applied, just vacuum). Once all the fabric is wet out, the resin inlets are closed, and the laminate is allowed to cure. Both injection and cure can take place at either ambient or elevated temperature.
(e) Infusion. Fabrics are laid up as a dry stack of materials as in RTM. The fibre stack is then covered with peel ply and a knitted type of non-structural fabric. The whole dry stack is then vacuum bagged, and once bag leaks have been eliminated, resin is allowed to flow into the laminate under vacuum. The resin distribution over the whole laminate is aided by resin flowing easily through the non-structural fabric, and wetting the fabric out from above.

The skilled person, making use of its general knowledge, is able of selecting and optimizing the parameters for performing any of the processes disclosed above.
(g) RFI (Resin Film Infusion). Dry fabrics are laid up interleaved with layers of semi-solid resin film supplied on a release paper. The lay-up is vacuum bagged to remove air through the dry fabrics, and then heated to allow the resin to first melt and flow into the air-free fabrics, and then after a certain time, to cure.
(f) SMC (Sheet Moulding Compound). Sheet Moulding Compound is an integrated ready-to-mould composition of fibres, resin and filler. SMC is made by metering a resin paste onto a thin plastic carrier film. The compound is made by chopping continuous fibres onto the resin paste as it is conveyed on the film. This fibre, resin mix is further covered by another layer of resin on a second carrier film. Compaction rollers knead the fibres into the resin for uniform fibre distribution and wetting. The compound sandwiched between the carrier films is gathered into rolls and stored until it matures. Upon maturation, SMC is tack free and has a leather-like consistency. The carrier film is removed and the sheet is prepared into a charge of predetermined weight and shape. The charge is placed on the bottom of two mould halves in a compression press and it cures under specific heat and pressure conditions.
(g) Prepreg based technologies. The fibrous reinforcement is typically impregnated, fully or partially, by the uncured epoxy matrix composition in accordance with any of the known prepreg manufacturing techniques, such as hot melt processing to produce unidirectional UD and fabric prepregs or solvent dip processing to produce fabric prepregs Once the reinforcement is impregnated, the epoxy matrix is partially cured (referred to as B-staged) and tacky, and in this form is supplied to the composite manufacturer, who can use it to lay-up the part (by hand lay-up, or automatic tape laying ATL or automatic fibre placement AFP) on the mould and cured the resin by vacuum bag moulding, autoclave moulding or press moulding.

The vacuum bag technique involves the placing and sealing of a flexible bag over a composite lay-up and evacuating all the air from under the bag. The removal of air forces the bag down onto the lay-up with a consolidation pressure of up to 1 atmosphere (1 bar). The completed assembly, with vacuum still applied, is placed inside an oven or on a heated mould with good air circulation, and the composite is produced after a relatively short cure cycle.

The autoclave technique requires a similar vacuum bag but the oven is replaced by an autoclave. The autoclave is a pressure vessel which provides the curing conditions for the composite where the application of vacuum, pressure, heat up rate and cure temperature are controlled.

Compression moulding describes the process whereby a stack of prepregs are compressed between a set matched dies using a powerful press, and then cured while under compression. The moulds may be heated or the prepregs may be preheated and formed in relatively cool moulds.

Another aspect of the present invention is an enduring prepreg comprising a reinforcement material layer which is partially or totally impregnated with a cured epoxy resin.

The term "prepreg" means a ready-to mould material in sheet form which may be a fibrous reinforcement preimpregnated fully or partially with a resin and store for use.

The term "enduring prepreg" means that the prepreg has no time limitation between the manufacturing date and the processing date of the prepreg

The term "partially impregnated" means a prepreg wherein the material layer is impregnated with resin from one side.

In one embodiment, the prepreg comprises a reinforcement material layer totally impregnated with the resin.

The term "totally impregnated" means that both sides of the material layer are impregnated with the resin.

All the embodiments disclosed above for the reinforcement material layer as well as for the epoxide-functionalised resin and the cross-linking agent of formula (I) applies also for the enduring prepregs of the second and third aspects.

In another embodiment, the enduring prepreg comprises a reinforcement material comprising glass or carbon fibre which is impregnated with the cured epoxy resin as defined in the first aspect of the invention and any of the embodiments disclosed above.

In one embodiment, the enduring prepreg of the second or third aspect comprises a reinforcement material comprising glass or carbon fibre which is impregnated with the cured epoxy resin obtainable by the process comprising: (a) mixing a mixture of difunctional epoxy resins comprising a bisphenol epoxy resin, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins comprising a bisphenol epoxy resin, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins comprising a bisphenol epoxy resin at a % by weight from 60 to 99, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins comprising a bisphenol A diglycidyl ether at a % by weight from 60 to 99, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins comprising a bisphenol A diglycidyl ether and 1,4-butanediol diglycidyl ether, with a cross-linking agent of formula (II) as defined above, in a molar ratio comprised from 2:1 to 1:1.

In one embodiment, the enduring prepreg of the second or third aspect comprises a reinforcement material comprising glass fibre which is impregnated with the cured epoxy resin obtainable by the process comprising: (a) mixing a mixture of two difunctional epoxy resins consisting of bisphenol A diglycidyl ether and 1,4-butanediol diglycidyl ether, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins consisting of bisphenol A diglycidyl ether at 80% w/w and 1,4-butanediol diglycidyl ether at 20% w/w, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of difunctional epoxy resins with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of difunctional epoxy resins comprising a bisphenol epoxy resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins comprising a bisphenol epoxy resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins comprising a bisphenol epoxy resin at a % by weight from 60 to 99, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins comprising a bisphenol A diglycidyl ether at a % by weight from 60 to 99, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins comprising a bisphenol A diglycidyl ether and 1,4-butanediol diglycidyl ether, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins consisting of bisphenol A diglycidyl ether and 1,4-butanediol diglycidyl ether, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins consisting of bisphenol A diglycidyl ether at 80% w/w and 1,4-butanediol diglycidyl ether at 20% w/w, with a cross-linking agent of formula (III) as defined above, in a molar ratio comprised from 2:1 to 1:1.

In one embodiment, the enduring prepreg of the second aspect of the invention comprises a reinforcement material layer which is a glass or carbon fibre layer, the fibre layer being impregnated with the cured epoxy resin obtainable by: (a) mixing a mixture of difunctional epoxy resins with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second aspect of the invention comprises a reinforcement material layer which is a glass or carbon fibre layer, the fibre layer being impregnated with the cured epoxy resin obtainable by: (a) mixing a mixture of difunctional epoxy resins comprising a bisphenol epoxy resin, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second aspect of the invention comprises a reinforcement material layer which is a glass or carbon fibre layer, the fibre layer being impregnated with the cured epoxy resin obtainable by: (a) mixing a mixture of two difunctional epoxy resins with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second aspect of the invention comprises a reinforcement material layer which is a glass or carbon fibre layer, the fibre layer being impregnated with the cured epoxy resin obtainable by: (a) mixing a mixture of two difunctional epoxy resins comprising a bisphenol epoxy resin, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second aspect of the invention comprises a reinforcement material layer which is a glass or carbon fibre layer, the fibre layer being impregnated with the cured epoxy resin obtainable by: (a) mixing a mixture of two difunctional epoxy resins comprising a bisphenol epoxy resin at a % by weight from 60 to 99, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second aspect of the invention comprises a reinforcement material layer which is a glass or carbon fibre layer, the fibre layer being impregnated with the cured epoxy resin obtainable by: (a) mixing a mixture of two difunctional epoxy resins comprising a bisphenol A diglycidyl ether at a % by weight from 60 to 99, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second aspect of the invention comprises a reinforcement material layer which is a glass or carbon fibre layer, the fibre layer being impregnated with the cured epoxy resin obtainable by: (a) mixing a mixture of two difunctional epoxy resins comprising a bisphenol A diglycidyl ether and 1,4-butanediol diglycidyl ether, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second aspect of the invention comprises a reinforcement material layer which is a glass or carbon fibre layer, the fibre layer being impregnated with the cured epoxy resin obtainable by: (a) mixing a mixture of two difunctional epoxy resins consisting of bisphenol A diglycidyl ether and 1,4-butanediol diglycidyl ether, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second aspect of the invention comprises a reinforcement material layer which is a glass or carbon fibre layer, the fibre layer being impregnated with the cured epoxy resin obtainable by: (a) mixing a mixture of two difunctional epoxy resins consisting of bisphenol A diglycidyl ether at 80% w/w and 1,4-butanediol diglycidyl ether at 20% w/w, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins and a tetrafunctional epoxy resin, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins, one of them being a bisphenol epoxy resin, and a tetrafunctional epoxy resin, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins, one of them being a bisphenol epoxy resin, and a tetrafunctional epoxy resin at a % by weight from 20 to 80 with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins, one of them being a bisphenol A diglycidyl ether at a % by weight from 20 to 80, and a tetrafunctional epoxy resin, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of epoxy functionalised resins comprising bisphenol A diglycidyl ether, 1,4-butanediol diglycidyl ether, and a tetrafunctional epoxy resin, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture consisting of bisphenol A diglycidyl ether, 1,4-butanediol diglycidyl ether, and a tetrafunctional epoxy resin, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of bisphenol A diglycidyl ether at 40% w/w, 1,4-butanediol diglycidyl ether at 10% w/w, and a tetrafunctional resin 50% w/w, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising difunctional and tetrafunctional epoxy resins with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising difunctional and tetrafunctional epoxy resins comprising a bisphenol epoxy resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising two difunctional epoxy resins and a tetrafunctional resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising two difunctional epoxy resins, one of them being a bisphenol epoxy resin, and a tetrafunctional epoxy resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising two difunctional epoxy resins, one of them being a bisphenol epoxy resin at a % by weight from 20 to 80, and a tetrafunctional epoxy resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising two difunctional epoxy resins, one of them being a bisphenol A diglycidyl ether at a % by weight from 20 to 80 and a tetrafunctional epoxy resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising bisphenol A diglycidyl ether, 1,4-butanediol diglycidyl ether, and a tetrafunctional epoxy resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture consisting of bisphenol A diglycidyl ether, 1,4-butanediol diglycidyl ether, and a tetrafunctional epoxy resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture consisting of bisphenol A diglycidyl ether at 40% w/w, 1,4-butanediol diglycidyl ether at 10% w/w, and a tetrafunctional epoxy resin at 50% w/w, with a cross-linking agent of formula (III) as defined above, in a molar ratio comprised from 2:1 to 1:1.

In one embodiment, the enduring prepreg of the second aspect comprises a a reinforcement material comprising glass or carbon fibre which is impregnated with the cured epoxy resin obtainable by the process comprising: (a) mixing a mixture consisting of bisphenol A diglycidyl ether at 40% w/w, 1,4-butanediol diglycidyl ether at 10% w/w, and a tetrafunctional epoxy resin at 50% w/w, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins and tetraglycidyl methylene dianiline, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins, one of them being a bisphenol epoxy resin, and tetraglycidyl methylene dianiline, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins, one of them being a bisphenol epoxy resin at a % by weight from 20 to 80, and tetraglycidyl methylene dianiline, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of two difunctional epoxy resins, one of them being a bisphenol A diglycidyl ether at a % by weight from 20 to 80, and tetraglycidyl methylene dianiline, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of epoxy functionalised resins comprising bisphenol A diglycidyl ether, 1,4-butanediol diglycidyl ether, and tetraglycidyl methylene dianiline, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture consisting of bisphenol A diglycidyl ether, 1,4-butanediol diglycidyl ether, and tetraglycidyl methylene dianiline, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture of bisphenol A diglycidyl ether at 40% w/w, 1,4-butanediol diglycidyl ether at 10% w/w, and tetraglycidyl methylene dianiline 50% w/w, with a cross-linking agent of formula (II) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising difunctional and tetraglycidyl methylene dianiline with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising difunctional and tetraglycidyl methylene dianiline comprising a bisphenol epoxy resin, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising two difunctional epoxy resins and tetraglycidyl methylene dianiline, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising two difunctional epoxy resins, one of them being a bisphenol epoxy resin, and tetraglycidyl methylene dianiline, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising two difunctional epoxy resins, one of them being a bisphenol epoxy resin at a % by weight from 20 to 80, and tetraglycidyl methylene dianiline, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising two difunctional epoxy resins, one of them being a bisphenol A diglycidyl ether at a % by weight from 20 to 80 and tetraglycidyl methylene dianiline, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture comprising bisphenol A diglycidyl ether, 1,4-butanediol diglycidyl ether, and tetraglycidyl methylene dianiline, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture consisting of bisphenol A diglycidyl ether, 1,4-butanediol diglycidyl ether, and tetraglycidyl methylene dianiline, with a cross-linking agent of formula (III) as defined above, in a molar ratio comprised from 2:1 to 1:1.

In one embodiment, the enduring prepreg of the second or third aspect comprises a reinforcement material comprising glass or carbon fibre which is impregnated with the cured epoxy resin obtainable by the process comprising: (a) mixing a mixture consisting of bisphenol A diglycidyl ether at 40% w/w, 1,4-butanediol diglycidyl ether at 10% w/w, and tetraglycidyl methylene dianiline at 50% w/w, with a cross-linking agent of formula (III) as defined above, in a molar ratio comprised from 2:1 to 1:1.

In one embodiment, the enduring prepreg of the second aspect comprises a reinforcement material comprising glass or carbon fibre which is impregnated with the cured epoxy resin obtainable by the process comprising: (a) mixing a mixture consisting of bisphenol A diglycidyl ether at 40% w/w, 1,4-butanediol diglycidyl ether at 10% w/w, and tetraglycidyl methylene dianiline at 50% w/w, with a cross-linking agent of formula (III) as defined above, in a molar ratio comprised from 2:1 to 1:1, and (b) curing the reaction mixture subjecting the mixture to a first cycle of 150 minutes at 120 °C and a second cycle of 120 minutes at 150 °C in order to cure the epoxy matrix completely.

The prepreg of the invention can be prepared following any of the methods already known in the state of the art. There are two main methods of producing prepreg; hot melt and solvent dip.

The hot melt method can be used to produce unidirectional (UD) and fabric prepregs. This requires two processing stages. In the first stage, heated epoxy resin is coated onto a paper substrate in a thin film. The reinforcement (unidirectional fibres or fabric) and the epoxy resin film are then brought together on the prepreg machine. Impregnation of the resin into the fibre is achieved using heat and pressure from nip rollers. The final prepreg is then wound onto a core.

The solvent dip method can only be used to produce fabric prepregs. In this technique, resin is dissolved in a bath of solvent and reinforcing fabric is dipped into the epoxy resin solution. The solvent is evaporated from the prepreg in a drying oven. This can be horizontal or vertical.

The enduring prepregs of the invention are used in the manufacture of composites.

There are well-known standard technologies for the manufacture of composites from prepregs.

In one embodiment, when the prepregs comprise a partially cured epoxy resin in the matrix phase, they lay-out (by hand lay-up, or automatic tape laying ATL or automatic fibre placement AFP) on the mould and the partially cured epoxy resin is totally cured by vacuum bag moulding, autoclave moulding or press moulding.

The vacuum bag technique involves the placing and sealing of a flexible bag over a composite lay-up and evacuating all the air from under the bag. The removal of air forces the bag down onto the lay-up with a consolidation pressure of up to 1 atmosphere (1 bar). The completed assembly, with vacuum still applied, is placed inside an oven or on a heated mould with good air circulation, and the composite is produced after a relatively short cure cycle.

In another embodiment, when the enduring prepregs comprise a partially cured (above B-stage) or a totally cured epoxy resin in the matrix phase, they are compressed between a set matched dies using a powerful press, and then cured while under compression. The moulds may be heated or the prepregs may be preheated and formed in relatively cool moulds. Also a diaphragm forming autoclave technique can be used. Diaphragm forming is an autoclave technique used solely for thermoplastic matrix composites. The laminate is laid up flat between two diaphragms (superplastic aluminium sheets or high temperature polymeric films), the diaphragms are clamped in a frame (the laminate is not clamped), then the laminate is formed using heat, vacuum and pressure in the autoclave.

In another aspect, the present invention provides an article made from the composite of the invention.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

### EXAMPLES

### 1. Materials and methods

Epoxy resin Araldite LY 1564 and hardener XB 3473 were purchased from Huntsman, bis(4-aminophenyl) disulfide (AFD) and *N,N,N',N'*-tetraglycidyl methylene dianiline were purchased from Sigma-Aldrich, and glass fibre reinforcement (HexForce 1103 PLAIN, basis weight 290 g/m²) and carbon fibre reinforcement (HexForce 43199 PLAIN, basis weight 200 g/m²) were purchased from Hexcel. All these materials were used as received.

Thermal analysis was performed on a differential scanning calorimetry (DSC) instrument from Perkin Elmer (Pyris Diamond DSC) over a temperature range from 30 °C to 250 °C under nitrogen. The DSC was calibrated for temperature from the melting point of indium (156.6 °C). The glass transition temperature (Tg) was obtained as the inflection point of the heat flow step recorded at a scan rate of 20 °C min-1. Mechanical testing was performed using an INSTRON 5985 controlled by Bluehill 3 software. Compression strength (ASTM 3410), flexural strength (ISO14125), impact strength (ISO 179) and interlaminate shear strength ILSS (ISO 14130) measurements were carried out according to international standards.

### Example 1. Thermoset epoxy resin having Tg = 160 °C

Araldite LY 1564 (10 g) and AFD (3.64 g) were fed into a 50 mL flask. The mixture was heated at 80 °C until the AFD was completely dissolved in the resin, while degassing by magnetic stirring under vacuum. Then, the mixture was poured onto a 2 mm thick mould and was allowed to cure at 120 °C for 150 minutes and then another 120 minutes at 150 °C. Tg = 160 °C (determined by DSC).

### Example 2. Thermoset epoxy resin having Tg = 136 °C

Araldite LY 1564 (10 g) and AFD (4.38 g) were fed into a 50 mL flask. The mixture was heated at 80 °C until the AFD was completely dissolved in the resin, while degassing by magnetic stirring under vacuum. Then, the mixture was poured onto a 2 mm thick mould and was allowed to cure at 120 °C for 150 minutes and then another 120 minutes at 150 °C. Tg = 136 °C (determined by DSC).

### Example 3. Thermoset epoxy resin with Tg = 120 °C

Araldite LY 1564 (10 g) and AFD (5.12 g) were fed into a 50 mL flask. The mixture was heated at 80 °C until the AFD was completely dissolved in the resin, while degassing by magnetic stirring under vacuum. Then, the mixture was poured onto a 2 mm thick mould and was allowed to cure at 120 °C for 150 minutes and then another 120 minutes at 150 °C. Tg = 120 °C (determined by DSC).

### Example 4. Thermoset epoxy resin with Tg = 105 °C

Araldite LY 1564 (10 g) and AFD (5.50 g) were fed into a 50 mL flask. The mixture was heated at 80 °C until the AFD was completely dissolved in the resin, while degassing by magnetic stirring under vacuum. Then, the mixture was poured onto a 2 mm thick mould and was allowed to cure at 120 °C for 150 minutes and then another 120 minutes at 150 °C. Tg = 105 °C (determined by DSC).

### Example 5. Thermoset epoxy resin with Tq = 138 °C

Araldite LY 1564 (10 g), Tetraglycidyl Methylene Dianiline (TGMDA) (10 g) and AFD (14.28 g) were fed into a 100 mL flask. The mixture was heated at 80 °C until the AFD was completely dissolved in the resin mixture, while degassing by magnetic stirring under vacuum. Then, the mixture was poured onto a 2 mm thick mould and was allowed to cure at 120 °C for 150 minutes. Tg = 138 °C (determined by DSC).

### Example 6. Preparation of enduring epoxy prepreq by manual impregnation

A sealant tape was placed on a 400 x 400 mm square glass mould. Then, a releasing agent (Frekote 770-NC) was sprayed evenly onto the surface of the mould. A 250 x 250 mm layer of glass fibre reinforcement HexForce 1103 PLAIN (basis weight 290 g/m²) was then placed on the mould. This was then manually impregnated with a mixture of the epoxy resin and AFD in the amounts of Example 4 (9.65 g) using a brush. When the glass fibre reinforcement was impregnated, it was covered with a release film and then a layer of breather cloth was placed on the top to soak up excess resin and ensure an adequate path for the vacuum pressure. Finally, it was sealed with a vacuum bagging film and a hose connected to a vacuum pump was attached to the sealed part. Vacuum was then applied to the enclosed part which was compacted by the vacuum. Once air was evacuated, curing was carried out in an oven at 120 °C for 2.5 hours and at 150 °C for additional 2 hours. The obtained enduring prepreg sheet was demoulded and stored without further precautions at room temperature.

### Example 7. Preparation of a multilayer epoxy composite by manual impregnation

A sealant tape was placed on a 400 x 400 mm square glass mould. Then, a releasing agent (Frekote 770-NC) was sprayed evenly onto the surface of the mould. A 250 x 250 mm sheet of glass fibre HexForce 1103 PLAIN (basis weight 290 g/m²) was placed on the mould. This was then manually impregnated with a mixture of the epoxy resin and AFD in the amounts of Example 4 (9.65 g) using a brush. Then, another 250 x 250 mm layer of glass fibre was placed and the same operation was repeated until a total of 9 impregnated layers were completed. After, a release film was placed onto the part and then a layer of breather cloth was placed to soak up excess resin and ensure an adequate path for the vacuum pressure. Finally, the part was sealed with a vacuum bagging film and a hose connected to a vacuum pump was attached to the sealed part. Vacuum was then applied to the enclosed part which was compacted by the vacuum. Once air was evacuated, curing was carried out in an oven at 120 °C for 2.5 hours and at 150 °C for additional 2 hours.

### Example 8. Processing of enduring epoxy prepreq into a multilayer laminate composite

Various single enduring prepreg sheets prepared as in Example 6 were layed up and processed in a hot press at 200 °C and 100 bar for 5 minutes. A perfectly compacted multilayer composite was obtained.

### Example 9. Processing of multiple sheets made of reference epoxy/hardener formulation into a multilayer laminate

As a reference experiment, 8 single sheets were prepared using a standard amine type hardener (Hardener XB 3473) and following the preparation method described in Example 6. Then, the 8 sheets were layed up and processed in a hot press at 200 °C and 100 bar for 5 minutes. It was observed that the sheets did not compact to form a single composite part, but they remained as individual sheets.

### Example 10. Mechanical characterization of a composite part fabricated from enduring epoxy prepregs

Mechanical characterization of composite laminates prepared as in examples 7 and 8 were carried out by means of compression strength, flexural strength, impact strength and interlaminar shear strength (ILSS) measurements. As it can be observed from the results shown in Table 1, the mechanical properties of the composite fabricated from 8 enduring prepreg sheets (Example 8) are comparable or slightly better than those obtained for the composite fabricated by manual impregnation of 8 consecutive reinforcement fibres (Example 7).

**Table 1. Mechanical characterization of multilayered laminates of examples 7 and 8.**

| **Ex.** | **Compression strength (MPa)** | | **Interlaminate shear strength (MPa)** | | **Flexural strength (MPa)** | | **Impact strength (KJ/m2)** | |
|---|---|---|---|---|---|---|---|---|
| | Average | Standard deviation | Average | Standard deviation | Average | Standard deviation | Average | Standard deviation |
| 7 | 242 | 18 | 29.4 | 1.24 | 557 | 66 | 159.1 | 17.7 |
| 8 | 292 | 16 | 37.6 | 2.81 | 595 | 39 | 193.9 | 15.3 |

### Example 11. Processing of enduring epoxy prepregs into a 3D component

6 sheets of 50 x 120 mm enduring epoxy prepreg of Example 6 were placed inside a preheated zig-zag mould and processed at 200 °C and 100 bar for 5 minutes. After cooling at room temperature, a zig-zag shaped 3D composite was obtained.

### Example 12. Reprocessing of multilayered epoxy composite into a 3D component

A 50 x 60 mm sample of the multilayered epoxy composite of Example 7 was placed inside a preheated zig-zag mould and reprocessed at 200 °C and 100 bar for 5 minutes. Then, the reprocessed material was cooled to room temperature and a zig-zag shaped 3D composite was obtained.

### Example 13. Reprocessable epoxy composite based on carbon fibre reinforcement

A sealant tape was placed on a 400 x 400 mm square glass mould. Then, a releasing agent (Frekote 770-NC) was sprayed evenly onto the surface of the mould. A 350 x 270 mm layer of carbon fibre reinforcement HexForce 43199 PLAIN (basis weight 200 g/m²) was then placed on the mould. This was then manually impregnated with a mixture of the epoxy resin and AFD in the amounts of Example 4 (20 g) using a brush. When the carbon fibre reinforcement was impregnated, it was covered with a release film and then a layer of breather cloth was placed on the top to soak up excess resin and ensure an adequate path for the vacuum pressure. Finally, it was sealed with a vacuum bagging film and a hose connected to a vacuum pump was attached to the sealed part. Vacuum was then applied to the enclosed part which was compacted by the vacuum. Once air was evacuated, curing was carried out in an oven at 120 °C for 2.5 hours and at 150 °C for additional 2 hours.

The obtained monolayer enduring prepreg was the cut into smaller pieces of 50 x 120 mm and 6 pieces were laid up and processed in a hot press at 200 °C and 100 bar for 5 minutes. A perfectly compacted multilayer composite was obtained. Finally, this multilayer composite was placed inside a preheated zig-zag mould and reprocessed at 200 °C and 100 bar for 5 minutes. Then, the reprocessed material was cooled to room temperature and a zig-zag shaped 3D composite was obtained.

### Example 14. Reprocessable epoxy composite based on an epoxy matrix comprising a mixture of di and tetra functionalised epoxy resins.

A sealant tape was placed on a 400 x 400 mm square glass mould. Then, a releasing agent (Frekote 770-NC) was sprayed evenly onto the surface of the mould. A 350 x 270 mm layer of carbon fibre reinforcement HexForce 43199 PLAIN (200 g/m2) was then placed on the mould. This was then manually impregnated with a mixture of the epoxy resins and AFD in the amounts of Example 5 (20 g) using a brush. When the carbon fibre reinforcement was impregnated, it was covered with a release film and then a layer of breather cloth was placed on the top to soak up excess resin and ensure an adequate path for the vacuum pressure. Finally, it was sealed with a vacuum bagging film and a hose connected to a vacuum pump was attached to the sealed part. Vacuum was then applied to the enclosed part which was compacted by the vacuum. Once air was evacuated, curing was carried out in an oven at 120 °C for 2.5 hours.

The obtained monolayer enduring prepreg was then cut into smaller pieces of 50 x 120 mm and 6 pieces were laid up and processed in a hot press at 200 °C and 100 bar for 5 minutes. A perfectly compacted multilayer composite was obtained. Finally, this multilayer composite was placed inside a preheated zig-zag mould and reprocessed at 200 °C and 100 bar for 5 minutes. Then, the reprocessed material was cooled to room temperature and a zig-zag shaped 3D composite was obtained.

### Example 15. Repairing composite parts that have suffered delamination

Delamination is one of the most common failures in multilayer composite parts. However, current thermoset composites cannot be repaired. To study the repairing ability of composite parts of the present invention, we first induce delamination to specimens made as in Example 7. To induce such delamination we just use the specimens in interlaminate shear strength measurements. After testing, the specimens showed delamination damage. Then, the damaged specimens were repaired in a hot press at 200 °C and 50 bar for 5 minutes. After being repaired, specimens were tested again to the same ILSS test in order to characterize the reparation efficiency. As shown in Table 2, a 100% recovery of interlaminate shear strength was observed, which means that the reparation efficiency was 100%.

**Table 2. ILSS values of pristine and repaired composite specimens.**

| **Example** | **Initial ILSS (MPa)** | | **Repaired ILSS (MPa)** | |
|---|---|---|---|---|
| | Average | Standard deviation | Average | Standard deviation |
| 7 | 37.6 | 2.81 | 38.0 | 24 |

### Example 16. Characterization of the chemical resistance of the epoxy composite

Chemical resistance of the epoxy composite of Example 6 and 7 towards different solvents and chemical agents was studied. 6 samples of the enduring epoxy prepreg of Example 6 were immersed in different solvents or chemical agents (NaOH 1N, HCl 1N, DMF, THF, toluene and acetone). After 72 hours at room temperature all samples remained unaltered.

### Example 17: Mechanochromic behaviour

A sample of the epoxy composites of Examples 6 and 7 was hit with a hammer. It was observed a colour change in the visible on the damaged area. Such mechanochromic behaviour was reversible and disappeared in 3 hours.

### Example 18. Reinforcement recovery from the enduring prepreq by chemical reduction of the epoxy matrix

A sample of the enduring epoxy prepreg of Example 6 was immersed in a solution of 2-mercaptoethanol (0.2 mL) in DMF (20 mL). The system was magnetically stirred at room temperature for 24 hours, after which the epoxy matrix was completely dissolved. The glass fibre reinforcement was recovered by drying in an oven at 100 °C with vacuum for 24 hours.

### Example 19. Preparation of a multilayer reference epoxy composite by manual impregnation

A sealant tape was placed on a 400 x 400 mm square glass mould. Then, a releasing agent (Frekote 770-NC) was sprayed evenly onto the surface of the mould. A 250 x 250 mm sheet of glass fibre HexForce 1103 PLAIN (basis weight 290 g/m2) was placed on the mould. This was then manually impregnated with a mixture of the epoxy resin (6.6 g) and Hardener XB 3473 (2.6 g) using a brush. Then, another 250 x 250 mm layer of glass fibre was placed and the same operation was repeated until a total of 9 impregnated layers were completed. After, a release film was placed onto the part and then a layer of breather cloth was placed to soak up excess resin and ensure an adequate path for the vacuum pressure. Finally, the part was sealed with a vacuum bagging film and a hose connected to a vacuum pump was attached to the sealed part. Vacuum was then applied to the enclosed part which was compacted by the vacuum. Once air was evacuated, curing was carried out in an oven at 120 °C for 2.5 hours and at 150 °C for additional 2 hours.

### Example 16. Reprocessing of multilayered reference epoxy composite in a 3D mould

A 50 x 60 mm sample of the multilayered reference epoxy composite of Example 15 was placed inside a preheated zig-zag mould and reprocessed at 200 °C and 100 bar for 5 minutes. Then, the reprocessed material was cooled to room temperature. In this case, a zig-zag shaped 3D composite was not obtained, but the laminate was broken instead.

### Example 20. Reprocessing of multilayered reference epoxy composite in a 3D mould

A 50 x 60 mm sample of the multilayered reference epoxy composite of Example 19 was placed inside a preheated zig-zag mould and reprocessed at 200 °C and 100 bar for 5 minutes. Then, the reprocessed material was cooled to room temperature. In this case, a zig-zag shaped 3D composite was not obtained, but the laminate was broken instead.

### Example 21. Reprocessing of grinded laminate of the invention

A multilayered epoxy composite as in Example 7 was grinded in a Pulverisette 19 cutting mill to obtained a fine powder. Then, 42 grams of the powder were placed on a square 150 x 150 mm mould and pressed at 210 °C and 100 bar for 3 minutes. After this process a fully compact square composite was obtained.

### Example 22. Reprocessing of grinded reference laminate

A multilayered reference epoxy composite as in Example 19 was grinded in a Pulverisette 19 cutting mill to obtained a fine powder. Then, 42 grams of the powder were placed on a square 150 x 150 mm mould and pressed at 210 °C and 100 bar for 3 minutes. After this process a powder was obtained.

### REFERENCES CITED IN THE APPLICATION

US2013/300020

## Claims

1. A thermomechanically reprocessable thermoset composite comprising
(i) a reinforcement phase comprising fibres, this phase being in a volume percentage comprised from 25 to 70% with respect to the total volume of the composite, and
(ii) a matrix phase which is in a volume percentage comprised from 30 to 75% with respect to the total volume of the composite,
being the sum of volumes of both phases forming the composite 100%, and
wherein the matrix phase comprises a cured epoxy resin in a percentage comprised from 50-100% by weight with respect to the total weight of the matrix phase, and the cured epoxy resin being obtainable by:
(a) mixing an epoxide-functionalised resin with a functionality equal to or higher than 2 with a cross-linking agent of formula (I)
Ar-S-S-Ar (I)
wherein
Ar means a ring system from 5 to 14 carbon atoms, the system comprising 1-3 rings, where:
the rings are saturated, partially unsaturated, or aromatic; provided that at least one ring is aromatic,
the rings are isolated, partially or totally fused,
at least one of the carbon atoms forming the aryl radical is substituted by an epoxide-reactive functional radical selected from the group consisting of: -NHR₁₀, -NH-NHR₁₀, -CO-NH-NHR₁₀, -COOH, -SH, -OH,-CO-NHR₁₀, -NCN-NH-NHR₁₀, 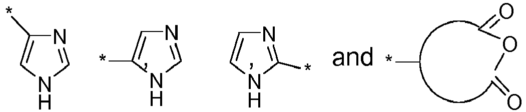 wherein the asterisk denotes the carbon atom through which the epoxide-reactive radical binds to the ring system,
and the remaining carbon atoms are optionally substituted by one or more radicals independently selected from the group consisting of (C₁-C₂₀)alkyl, (C₅-C₁₄)aryl, -OR₂, -(CO)R₃, -O(CO)R₄, -(SO)R₅, -NH-CO-R₆, -COOR₇, -NR₈R₉, -NO₂, and halogen;
R₂ to R₁₀ are the same or different, and are selected from the group consisting of: -H, (C₁-C₂₀)alkyl, and phenyl;
Ar is bonded to the -S- atom through an aromatic ring;and the molar ratio between the epoxide groups of the epoxide-functionalised resin and the epoxide-reactive functional radicals of the cross-linking agent of formula (I) is comprised from stoichiometric to a two-fold excess of epoxide reactive functional group, and
(b) curing the reaction mixture at a temperature comprised from 10 to 200 °C, this step being performed in the absence of a catalyst.

2. The composite of claim 1, wherein the epoxide-reactive functional radical is -NH₂, and the molar ratio is comprised from 2:1 to 1:1.

3. The composite of any of the claims 1-2, wherein the cross-linking agent is one of formula (II) 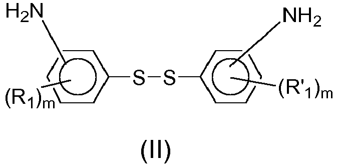 wherein
R₁ and R₁' are independently selected from the group consisting of: -H, (C₁-C₂₀)alkyl, (C₅-C₁₄)aryl, -OR₂, -(CO)R₃, -O(CO)R₄, -(SO)R₅, -NH-CO-R₆, -COOR₇, -NR₈R₉, -NO₂, and halogen;
R₂ to R₉ are independently selected from the group consisting of: -H, (C₁-C₂₀)alkyl, and (C₅-C₁₄)aryl; and
m is 4.

4. The composite of claim 3, wherein the -NH₂ radicals are in para-position.

5. The composite of claim 4, wherein the cross-linking agent is one of formula (III):

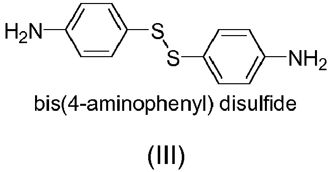

6. The composite of any one of the preceding claims, wherein the epoxide-functionalised resin is a difunctional epoxy resin or a mixture comprising one or more difunctional epoxy resins.

7. The composite of claim 6, wherein the epoxide-functionalised resin is a mixture consisting of two difunctional epoxy resins.

8. The composite of claim 6, wherein the epoxide-functionalised resin is a mixture consisting of two difunctional epoxy resins and a tetrafunctional epoxy resin.

9. The composite of any one of the claims 6-8, wherein the mixture comprises a bisphenol epoxy resin.

10. The composite of any one the preceding claims, wherein the fibres of the reinforcement phase are selected from the group consisting of: glass, carbon, aramide, flax, and combinations thereof.

11. The composite of claim 10, wherein the fibrous material is glass or carbon fibre.

12. An enduring prepreg comprising a reinforcement material layer which is partially or totally impregnated with a completely cured epoxy resin, wherein:
the reinforcement material layer comprises fibres, and
the cured epoxy resin is obtainable by
(i) mixing the epoxide-functionalised resin with a functionality equal to or higher than 2 with a cross-linking agent of formula (I) as defined in any of the preceding claims 1-9, at a molar ratio between the epoxide groups of the epoxy-functionalised resin and the epoxide-reactive functional radicals of the cross-linking agent of formula (I) comprised from the stoichiometric to a two-fold excess of epoxide reactive functional group; and
(ii) curing the mixture at a temperature comprised from 10 to 200 °C for a period of time such that the resin reaches the maximum Tg value.

13. An enduring prepreg comprising a reinforcement material layer which is partially or totally impregnated with a partially cured epoxy resin, wherein:
the reinforcement material layer comprises fibres, and
the cured epoxy resin is obtainable by
(i) mixing the epoxide-functionalised resin with a functionality equal to or higher than 2 with a cross-linking agent of formula (I) as defined in any of the preceding claims 1-9, at a molar ratio between the epoxide groups of the epoxy-functionalised resin and the epoxide-reactive functional radicals of the cross-linking agent of formula (I) comprised from the stoichiometric to a two-fold excess of epoxide reactive functional group; and
(ii) curing the mixture at a temperature comprised from 10 to 200 °C for a period of time such that the resin reaches a Tg value which is equal or higher than 10 °C but lower than the maximum Tg.

14. A process for the manufacture of a composite as defined in any one of the claims 1-11, the process comprising:
(a) mixing the epoxide functionalised resin with the curing agent of formula (I) where the molar ratio between the epoxide groups of the epoxide-functionalised resin and the epoxide-reactive functional radicals of the cross-linking agent of formula (I) is from stoichiometric to a two-fold excess of epoxide reactive functional group;
(b) impregnating a reinforcement phase with the reaction mixture of step (a); and
(c) curing the reaction mixture at a temperature comprised from 10 to 200 °C for a period of time such that the resin reaches at least 50% of the maximum Tg value, applying optionally pressure, or, alternatively
(d) laying up enduring prepreg layers as defined in claim 12, and
(e) applying heat and pressure; or, alternatively,
(f) laying up enduring prepreg layers as defined in claim 13, and
(g) curing applying heat and pressure for a period of time such that the resin reaches the maximum Tg value.

15. An article of manufacture made of a composite as defined in any of the claims 1-11 or of a prepreg as defined in any of the claims 12-13.

## Patentansprüche

1. Ein thermomechanisch wiederverarbeitbarer Duroplast-Verbundwerkstoff umfassend
(i) eine Verstärkungsphase umfassend Fasern, wobei diese Phase in einem Volumenprozent von 25 bis 70% bezogen auf das gesamte Volumen des Verbundwerkstoffs ist, und
(ii) eine Matrixphase, welche in einem Volumenprozent von 30 bis 75% bezogen auf das gesamte Volumen des Verbundwerkstoffs ist,
wobei die Summe der Volumen von beiden Phasen den 100% des Verbundwerkstoffs ausmachen, und
wobei die Matrixphase ein ausgehärtetes Epoxidharz in einem Prozent von 50-100 Gew.-% bezogen auf das gesamte Gewicht der Matrixphase umfasst, und das ausgehärtete Epoxidharz wie folgt erhalten werden kann:
(a) mischen von einem mit Epoxid funktionalisierten Harz mit einer Funktionalität von 2 oder höher mit einem Vernetzungsmittel der Formel (I)
Ar-S-S-Ar (I)
wobei
Ar für ein Ringsystem von 5 bis 14 Kohlenstoffatomen steht, wobei das System 1-3 Ringe umfasst, worin:
die Ringe gesättigt, teilweise ungesättigt, oder aromatisch sind;
mit der Maßgabe, dass mindestens ein Ring aromatisch ist,
wobei die Ringe isoliert, teilweise oder vollständig kondensiert sind, wobei mindestens eines der Kohlenstoffatome, welche das Arylradikal bilden durch ein Epoxid-reaktiv-funktionelles Radikal ersetzt ist, das ausgewählt ist aus der Gruppe bestehend aus: -NHR₁₀, -NH-NHR₁₀,-CO-NH-NHR₁₀, -COOH, -SH, -OH, -CO-NHR₁₀, -NCN-NH-NHR₁₀, 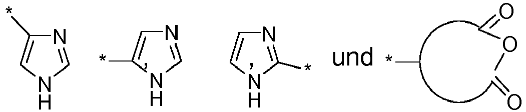 wobei der Asterisk das Kohlenstoffatom **kennzeichnet, durch** das sich das Epoxid-reaktive Radikal an das Ringsystem bindet,
und die restlichen Kohlenstoffatome wahlweise **durch** ein oder mehrere Radikale ersetzt sind, die unabhängig voneinander aus der Gruppe bestehend aus (C₁-C₂₀)-Alkyl, (C₅-C₁₄)-Aryl, -OR₂, -(CO)R₃, -O(CO)R₄, -(SO)R₅, -NH-CO-R₆, -COOR₇, -NR₈R₉, -NO₂, und Halogen ausgewählt sind;
R₂ bis R₁₀ die gleichen oder verschieden sind, und ausgewählt sind aus der Gruppe bestehend aus: -H, (C₁-C₂₀)-Alkyl, und Phenyl;
Ar an dem -S- Atom **durch** einen aromatischen Ring gebunden ist; und das Molverhältnis von den Epoxidgruppen des mit Epoxid funktionalisierten Harzes zu den Epoxid-reaktiv-funktionellen Radikalen des Vernetzungsmittels der Formel (I) von stöchiometrisch bis zu einem zweifachen Überschuss von epoxid-reaktiver funktioneller Gruppe reicht, und
(b) aushärten der Reaktionsmischung bei einer Temperatur von 10 bis 200 °C, wobei dieser Schritt in Abwesenheit von einem Katalysator durchgeführt wird.

2. Der Verbundwerkstoff des Anspruchs 1, wobei das Epoxid-reaktivfunktionelle Radikal -NH₂ ist, und das Molverhältnis von 2:1 bis 1:1 reicht.

3. Der Verbundwerkstoff von einem der Ansprüche 1-2, wobei das Vernetzungsmittel eines der Formel (II) ist 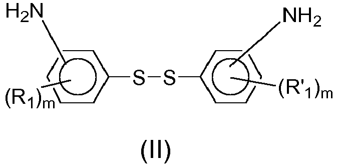 wobei
R₁ und R₁' unabhängig voneinander ausgewählt sind aus der Gruppe bestehend aus: -H, (C₁-C₂₀)-Alkyl, (C₅-C₁₄)-Aryl, -OR₂, -(CO)R₃, -O(CO)R₄, -(SO)R₅, -NH-CO-R₆, -COOR₇, -NR₈R₉, -NO₂, und Halogen;
R₂ bis R₉ unabhängig voneinander ausgewählt sind aus der Gruppe bestehend aus: -H, (C₁-C₂₀)-Alkyl, und (C₅-C₁₄)-Aryl; und
m ist 4.

4. Der Verbundwerkstoff des Anspruchs 3, wobei die -NH₂ Radikale in *para-*Position sind.

5. Der Verbundwerkstoff des Anspruchs 4, wobei das Vernetzungsmittel eines der Formel (III) ist:

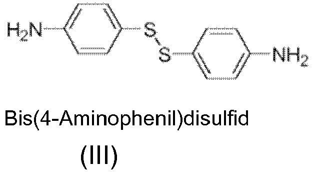

6. Der Verbundwerkstoff von einem der vorhergehenden Ansprüche, wobei das mit Epoxid funktionalisierte Harz ein bifunktionelles Epoxidharz oder eine Mischung umfassend ein oder mehrere bifunktionelle Epoxidharze ist.

7. Der Verbundwerkstoff des Anspruchs 6, wobei das mit Epoxid funktionalisierte Harz eine Mischung bestehend aus zwei bifunktionellen Epoxidharzen ist.

8. Der Verbundwerkstoff des Anspruchs 6, wobei das mit Epoxid funktionalisierte Harz eine Mischung bestehend aus zwei bifunktionellen Epoxidharzen und einer tetrafunktionellen Epoxidharz ist.

9. Der Verbundwerkstoff von einem der Ansprüche 6-8, wobei die Mischung ein Bisphenol-Epoxidharz umfasst.

10. Der Verbundwerkstoff von einem der vorhergehenden Ansprüche, wobei die Fasern der Verstärkungsphase ausgewählt aus der Gruppe bestehend aus: Glas, Kohlenstoff, Aramid, Flachs und Kombinationen davon sind.

11. Der Verbundwerkstoff des Anspruchs 10, wobei das faserige Material Glas- oder Kohlenstofffaser ist

12. Ein beständiges Prepreg umfassend eine Schicht aus Verstärkungsmaterial, welche teilweise oder gänzlich mit einem vollständig ausgehärteten Epoxidharz imprägniert ist, wobei:
die Schicht aus Verstärkungsmaterial Fasern umfasst, und
das ausgehärtete Epoxidharz wie folgt erhalten werden kann
(i) mischen des mit Epoxid funktionalisierten Harzes mit einer Funktionalität von 2 oder höher mit einem Vernetzungsmittel der Formel (I) wie in einem der vorhergehenden Ansprüche 1-9 definiert, bei einem Molverhältnis von den Epoxidgruppen des mit Epoxid funktionalisierten Harzes zu den Epoxid-reaktiv-funktionellen Radikalen des Vernetzungsmittels der Formel (I) reichend von stöchiometrisch bis zu einem zweifachen Überschuss von Epoxid-reaktiv-funktioneller Gruppe; und
(ii) aushärten der Mischung bei einer Temperatur reichend von 10 bis 200 °C während eines Zeitraums, so dass das Harz den maximalen Tg-Wert erreicht.

13. Ein beständiges Prepreg umfassend eine Schicht aus Verstärkungsmaterial, welche teilweise oder gänzlich mit einem teilweisen ausgehärteten Epoxidharz imprägniert ist, wobei:
die Schicht aus Verstärkungsmaterial Fasern umfasst, und
das ausgehärtete Epoxidharz wie folgt erhalten werden kann
(i) mischen des mit Epoxid funktionalisierten Harzes mit einer Funktionalität von 2 oder höher mit einem Vernetzungsmittel der Formel (I) wie in einem der vorhergehenden Ansprüche 1-9 definiert, bei einem Molverhältnis von den Epoxidgruppen des mit Epoxid funktionalisierten Harzes zu den Epoxid-reaktiv-funktionellen Radikalen des Vernetzungsmittels der Formel (I) reichend von stöchiometrisch bis zu einem zweifachen Überschuss von Epoxid-reaktiv-funktioneller Gruppe; und
(ii) aushärten der Mischung bei einer Temperatur von 10 bis 200 °C während eines Zeitraums, so dass das Harz einen Tg-Wert erreicht, der 10 °C gleicht oder höher ist aber niedriger als die maximale Tg ist.

14. Ein Verfahren zur Herstellung von einem Verbundwerkstoff wie in einem der Ansprüche 1-11 definiert, wobei das Verfahren folgendes umfasst:
(a) mischen des mit Epoxid funktionalisierten Harzes mit dem Aushärtungsmittel der Formel (I), worin das Molverhältnis von den Epoxidgruppen des mit Epoxid funktionalisierten Harzes zu den Epoxid-reaktiv-funktionellen Radikalen des Vernetzungsmittels der Formel (I) von stöchiometrisch bis zu einem zweifachen Überschuss von epoxid-reaktiv-funktioneller Gruppe reicht;
(b) imprägnieren von einer Verstärkungsphase mit der Reaktionsmischung des Schritts (a); und
(c) aushärten der Reaktionsmischung bei einer Temperatur von 10 bis 200 °C während eines Zeitraums, so dass das Harz mindestens 50% des maximalen Tg-Werts erreicht, wahlweise ausüben von Druck, oder, ersatzweise
(d) auflegen von Schichten aus beständigem Prepreg wie in Anspruch 12 definiert, und
(e) anwenden von Hitze und Druck; oder, ersatzweise,
(f) auflegen von Schichten aus beständigem Prepreg wie in Anspruch 13 definiert, und
(g) aushärten anwenden von Hitze und Druck während eines Zeitraums, so dass das Harz den maximalen Tg-Wert erreicht.

15. Ein Erzeugnis aus einem Verbundwerkstoff wie in einem der Ansprüche 1-11 definiert oder aus einem Prepreg wie in einem der Ansprüche 12-13 definiert.

## Revendications

1. Un composite thermodurcissable pouvant être retraité de manière thermomécanique comprenant
(i) une phase de renfort comprenant des fibres, cette phase étant dans un pourcentage en volume allant de 25 à 70 % par rapport au volume total du composite, et
(ii) une phase de matrice qui est dans un pourcentage en volume allant de 30 à 75% par rapport au volume total du composite,
étant la somme de volumes de toutes deux phases formant le composite 100 %, et
dans lequel la phase de matrice comprend une résine époxy curée dans un pourcentage allant de 50-100 % en poids par rapport au poids total de la phase de matrice, et la résine époxy curée pouvant être obtenue en :
(a) mélangeant une résine à fonctionnalité époxy avec une fonctionnalité égale ou supérieure à 2 avec un agent de réticulation de formule (I)
Ar-S-S-Ar (I)
dans laquelle
Ar signifie un système annulaire de 5 à 14 atomes de carbone, le système comprenant 1-3 anneaux, où :
les anneaux sont saturés, partiellement insaturés, ou aromatiques ; à condition qu'au moins un anneau soit aromatique,
les anneaux sont isolés, partiellement ou totalement condensés,
au moins un des atomes de carbone formant le radical aryle est substitué par un radical à fonction réactive époxy choisi dans le groupe constitué de : -NHR₁₀, -NH-NHR₁₀, -CO-NH-NHR₁₀, -COOH, -SH, -OH, -CO-NHR₁₀, -NCN-NH-NHR₁₀, 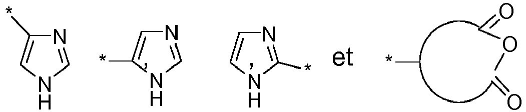 dans lequel l'astérisque désigne l'atome de carbone à travers lequel le radical réactive époxy se lie au système annulaire,
et les atomes de carbone restantes sont facultativement substitués par un ou plusieurs radicaux indépendamment choisis dans le groupe constitué d'alkyle en (C₁-C₂₀), aryle en (C₅-C₁₄), -OR₂, -(CO)R₃, -O(CO)R₄, -(SO)R₅, -NH-CO-R₆, -COOR₇, -NR₈R₉, -NO₂, et halogène ;
R₂ à R₁₀ sont les mêmes ou différents, et ils sont choisis dans le groupe constitué de : -H, alkyle en (C₁-C₂₀), et phényle ;
Ar est lié à l'atome -S- à travers un anneau aromatique ; et le rapport molaire des groupes époxy de la résine à fonctionnalité époxy aux radicaux à fonctionnalité réactive époxy de l'agent de réticulation de formule (I) est compris de stoechiométrique à un excès double de groupe à fonctionnalité réactive époxy, et
(b) curant le mélange de réaction à une température allant de 10 à 200 °C, cette étape étant réalisée en l'absence d'un catalyseur.

2. Le composite de la revendication 1, dans lequel le radical à fonctionnalité réactive époxy est -NH₂, et le rapport molaire est compris de 2:1 à 1:1.

3. Le composite de l'une quelconque des revendications 1-2, dans lequel l'agent de réticulation est un de formule (II) 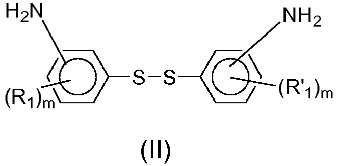 dans laquelle
R₁ et R₁' sont indépendamment choisis dans le groupe constitué de : -H, alkyle en (C₁-C₂₀), aryle en (C₅-C₁₄), -OR₂, -(CO)R₃, -O(CO)R₄, -(SO)R₅, -NH-CO-R₆, -COOR₇, -NR₈R₉, -NO₂, et halogène ;
R₂ à R₉ sont choisis indépendamment dans le groupe constitué de : -H, alkyle en (C₁-C₂₀), et aryle en (C₅-C₁₄) ; et
m est 4.

4. Le composite de la revendication 3, dans lequel les radicaux -NH₂ sont en position *para.*

5. Le composite de la revendication 4, dans lequel l'agent de réticulation est un de formule (III) :

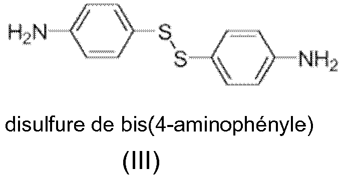

6. Le composite de l'une quelconque des revendications précédentes, dans lequel la résine à fonctionnalité époxy est une résine époxy difonctionnelle ou un mélange comprenant une ou plusieurs résines époxy difonctionnelles.

7. Le composite de la revendication 6, dans lequel la résine á fonctionnalité époxy est un mélange constitué de deux résines époxy difonctionnelles.

8. Le composite de la revendication 6, dans lequel la résine á fonctionnalité époxy est un mélange constitué de deux résines époxy difonctionnelles et une résine époxy tétrafonctionnelle.

9. Le composite de l'une quelconque des revendications 6-8, dans lequel le mélange comprend une résine époxy bisphénol.

10. Le composite de l'une quelconque des revendications précédentes, dans lequel les fibres de la phase de renfort sont choisies dans le groupe constitué de : verre, carbone, aramide, lin, et des combinaisons de ceux-ci.

11. Le composite de la revendication 10, dans lequel le matériau fibreux est verre ou de fibre de carbone.

12. Un prépreg durable comprenant une couche de matériau de renfort qui est partiellement ou totalement imprégnée avec une résine époxy complètement curée, dans lequel :
la couche de matériau de renfort comprend des fibres, et
la résine époxy curée peut être obtenue en
(i) mélangeant la résine à fonctionnalité époxy avec une fonctionnalité égale ou supérieure à 2 avec un agent de réticulation de formule (I) tel que défini dans l'une quelconque des revendications précédentes 1-9, dans un rapport molaire des groupes époxy de la résine à fonctionnalité époxy aux radicaux à fonctionnalité réactive époxy de l'agent de réticulation de formule (I) est compris allant de stoechiométrique à un excès double de groupe fonctionnel réactive époxy ; et
(ii) curant le mélange à une température comprise allan de 10 à 200 °C pendant une période de temps telle que la résine atteint la valeur de Tg maximale.

13. Un prépreg durable comprenant une couche de matériau de renfort qui est partiellement ou totalement imprégnée avec une résine époxy partiellement curée, dans lequel :
la couche de matériau de renfort comprend des fibres, et
la résine époxy curée peut être obtenue en
(i) mélangeant la résine à fonctionnalité époxy avec une fonctionnalité égale ou supérieure à 2 avec un agent de réticulation de formule (I) tel que défini dans l'une quelconque des revendications précédentes 1-9, dans un rapport molaire des groupes époxy de la résine à fonctionnalité époxy aux radicaux à fonctionnalité réactive époxy de l'agent de réticulation de formule (I) est compris allant de stoechiométrique à un excès double de groupe fonctionnel réactive époxy ; et
(ii) curant le mélange à une température comprise allan de 10 à 200 °C pendant une période de temps telle que la résine atteint une valeur de Tg qui est égale ou supérieure à 10 °C mais inférieure à la Tg maximale.

14. Un procédé de fabrication d'un composite tel que défini dans l'une quelconque des revendications 1-11, le procédé comprenant :
(a) mélanger la résine à fonctionnalité époxy avec un agent durcisseur de formule (I) où le rapport molaire des groupes époxy de la résine à fonctionnalité époxy aux radicaux à fonctionnalité réactive époxy de l'agent de réticulation de formule (I) va de stoechiométrique à un excès double de groupe à fonctionnalité réactive époxy ;
(b) imprégner une phase de renfort avec le mélange de réaction de l'étape (a) ; et
(c) curer le mélange de réaction à une température comprise allant de 10 à 200 °C pendant une période de temps telle que la résine atteint au moins 50% de la valeur de Tg maximale, appliquer facultativement de la pression, ou, alternativement
(d) tendre des couches de prépreg durable tel que défini dans la revendication 12, et
(e) appliquer de la chaleur et de la pression ; ou, alternativement,
(f) tendre des couches de prépreg durable tel que défini dans la revendication 13, et
(g) curer appliquer de la chaleur et de la pression pendant une période de temps telle que la résine atteint la valeur de Tg maximale.

15. Un article de fabrication réalisé en un composite tel que défini dans l'une quelconque des revendications 1-11 ou en un prépreg tel que défini dans l'une quelconque des revendications 12-13.
